# EUROPEAN PATENT SPECIFICATION

(11) **EP 3 093 935 B1**
(45) Date of publication and mention of the grant of the patent: **18.09.2019**
(21) Application number: 14890755.3
(22) Date of filing: 29.10.2014
(51) Int. Cl.: H01T 19/04, G01N 27/62, H01T 23/00

(54) **DISCHARGE ELECTRODE AND TESTING DEVICE**
ENTLADUNGSELEKTRODE UND PRÜFVORRICHTUNG
ÉLECTRODE DE DÉCHARGE ET DISPOSITIF D'ESSAI

(30) Priority: 01.05.2014 JP 2014094461
(43) Date of publication of application: 16.11.2016
(73) Proprietor: IHI Corporation, Tokyo 135-8710 (JP)
(72) Inventor: FURUKAWA, Hiroyuki, Tokyo 135-8710 (JP)
(74) Representative: MERH-IP Matias Erny Reichl Hoffmann Patentanwälte PartG mbB
(86) International application number: PCT/JP2014/078784
(87) International publication number: WO 2015/166601

(56) References cited:
- WO-A1-2008/038349
- JP-A- H0 764 375
- JP-A- 2000 111 596
- JP-A- 2005 116 202
- JP-A- 2007 188 852
- JP-A- 2008 047 324
- JP-A- 2009 004 204
- JP-A- 2009 081 015
- JP-U- H0 459 000

## Description

### TECHNICAL FIELD

Embodiments described herein relates to a discharge electrode suitable for generation of glow corona discharge and a testing device including the discharge electrode.

### BACKGROUND

As a conventionally-known phenomenon during operation of airplanes, particles in the air, including water vapor, rain, and snow, are charged by friction therebetween, and when such particles collide with airplane bodies or engines, the bodies and engines are charged with static electricity. Components provided with no grounding path to the atmosphere generate glow corona discharge to the atmosphere due to the charged static electricity. Such a discharge of static electricity sometimes causes failure in radios and flight equipment as noise or the like. This phenomenon is called precipitation static.

Recently, airplanes use many nearly insulating composite materials, and there is a demand for proper evaluation of precipitation static in order to prevent precipitation static even in the airplanes using such composite materials. The evaluation needs to generate stable glow corona discharge so as to replicate the precipitation static. In the process of finally discharging the charged static electricity out of airplanes, it is necessary to provide a proper conducting path for even a metallic component as a conductor to lead the static electricity. Gap in the middle of the conducting path causes unintended discharge (see for example Patent Document 1).

An ion wind generation device is known that generates a corona discharge between a discharge electrode and a counter electrode, wherein at least either one electrode of the discharge electrode and the counter electrode is constituted to make a conductive auxiliary agent exist in a surface and/or inside a sheet material composed of a flame-retardant or nonflammable insulating material (see for example Patent Document 2).

### PRIOR ART DOCUMENTS

### PATENT DOCUMENT

Patent Document 1: JP S60-132666 A
Patent Document 2: JP 2009 004204 A disclosing the preamble of claim 1.

### SUMMARY

### PROBLEMS TO BE SOLVED BY EMBODIMENTS

However, there is no method established which can stably generate glow corona discharge. Moreover, the glow corona discharge is known to become unstable depending on the conditions, including the electrode shape and the range of voltage, and produce Trichel pulses.

The present embodiments are proposed in the light of the aforementioned circumstances, and an object thereof is to provide a discharge electrode capable of stably generating glow corona discharge and a testing device using the discharge electrode to evaluate a component.

### MEANS FOR SOLVING THE PROBLEMS

To solve the aforementioned problems, a discharge electrode according to the application is a discharge electrode generating glow corona discharge, including: a tip section including a continuous blade forming a closed curve in a plane perpendicular to the longitudinal direction of the discharge electrode, the blade including a serrated edge formed in the direction that the blade extends.

The tip section is a cylindrical shape, and the blade is formed by a part of the inner surface of the cylindrical shape and a part of the outer surface thereof inclined inward. The serrated edge may include a plurality of serrations having an identical shape.

The discharge electrode according to the application, further including: a base section supplying voltage to the discharge electrode. The tip section is connected to the base section through a resistor having a predetermined resistance value.

The tip section and resistor may be joined coaxially by screwing or conducting adhesive.

A testing device according to the application evaluates a component by using any one of the discharge electrodes to supply glow corona discharge to the component through the discharge electrode.

### EFFECTS

The discharge electrode according to the application is capable of stably generating glow corona discharge with reduced Trichel pulses independently of the conditions including the electrode shape and voltage range.

The discharge electrode according to the application includes the electrode stably generating glow corona discharge and thereby enabling to effectively pursue the test of components over the precipitation static.

### BRIEF DESCRIPTION OF DRAWINGS

Fig. 1 includes block diagrams illustrating a schematic configuration of a discharge testing device.
Fig. 2 includes views illustrating appearances of an electrode section and an electrode section supporting member.
Fig. 3 is a perspective view illustrating the appearance of a blade-shaped/serrated electrode.
Fig. 4 includes diagrams illustrating the dimensions of the blade-shaped/serrated electrode.
Fig. 5 is a partially-enlarged side view illustrating the dimensions of the blade-shaped/serrated electrode.
Fig. 6 is a partially-enlarged side view illustrating the dimensions of the blade-shaped/serrated electrode.
Fig. 7 includes diagrams illustrating the potential distribution around the blade-shaped/serrated electrode.
Fig. 8 includes diagrams illustrating the potential distribution around the blade-shaped/serrated electrode when each serration has a smaller angle than that of Fig. 7.
Fig. 9 includes diagrams illustrating the potential distribution around the blade-shaped/serrated electrode when each serration has a larger angle than that of Fig. 7.
Fig. 10 is a graph illustrating measurements of applied voltage and discharge current. Fig. 11 is a perspective view illustrating the appearance of a pair of the blade-shaped electrode and a resistor.
Fig. 12 includes side and perspective views illustrating the pair of the blade-shaped electrode and resistor, respectively.
Fig. 13 is a cross-sectional diagram illustrating the potential distribution around the joint between the pair of the blade-shaped electrode and resistor.
Fig. 14 includes cross-sectional diagrams illustrating the potential distribution around the joint of the pair of the blade-shaped electrode and resistor under the same conditions as those in Fig. 13 except that the resistor has a smaller diameter than the electrode. Fig. 15 is a cross-sectional diagram illustrating the electric field distribution around the pair of the blade-shaped electrode and resistor.
Fig. 16 is a cross-sectional diagram illustrating the electric field distribution around the joint of the pair of the blade-shaped electrode and resistor, which is obtained by reducing the resistance of the resistor in Fig. 15.
Fig. 17 is a perspective view illustrating the appearance of the electrode section including a comb-shaped electrode, an electrode section supporting member, and a test piece.
Fig. 18 is a graph illustrating measurements of applied voltage and discharge current for the comb-shaped electrode.
Fig. 19 is a perspective view illustrating the appearance of the blade-shaped electrode. Fig. 20 is a perspective view illustrating the appearances of the electrode section including a linear electrode, an electrode section supporting member, and a test piece.

### DESCRIPTION OF EMBODIMENTS

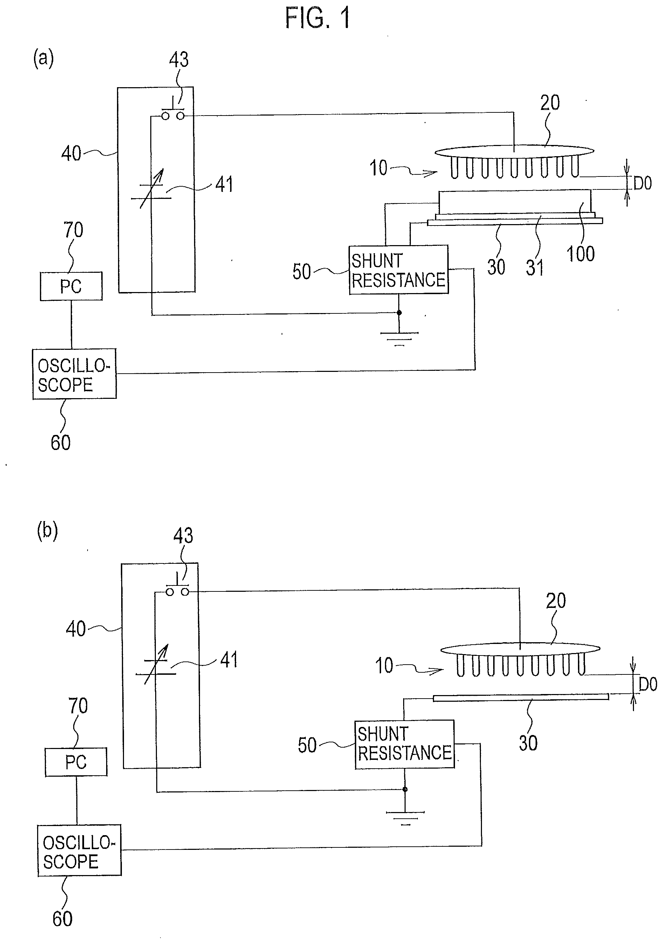

Hereinafter, a description is given of embodiments of a discharge electrode and a testing device in detail with reference to the drawings. Fig. 1 illustrates block diagrams illustrating a schematic configuration of a discharge testing device including a discharge electrode. In Fig. 1(a), a test piece 100 to be tested is placed.

The discharge testing device includes an electrode section 10 and an electrode section supporting member 20. On the lower surface of the electrode section supporting member 20, at least one electrode section 10 can be provided. The discharge testing device further includes a grounding plate 30 and an insulator 31. The grounding plate 30 is situated under the electrode section 10 and faces the electrode section 10. The insulator 31 is situated on the grounding plate 30 and has a predetermined thickness. The test piece 100 to be subjected to a discharge test is placed on the grounding plate 30 with the insulator 31 interposed therebetween, and there is a distance D0 between the test piece 100 and electrode section 10.

The grounding plate 30 provides a potential reference to the discharge testing device. The grounding plate 30 can be made of an aluminum or copper plate and have a rectangular or circular shape. The distance DO between the test piece 100 and electrode section can be 1 inch, or 25.4 mm, for example.

To the electrode section supporting member 20, a predetermined voltage is applied from a power supply 40. The power supply 40 includes a high-voltage DC power supply 41 and a switch 43 and can supply a voltage at a predetermined timing. The high-voltage DC power supply 41 can change the supply voltage in a range from -30 kV to 0 V and can supply 10 µA current at -30 kV.

The test piece 100 is subjected to a test that evaluates performances related to discharge by the discharge testing device. The test piece 100 is an airplane component, for example. The test piece 100 is grounded through a shunt resistance 50. The shunt resistance 50 detects discharge current flown to the test piece 100 from the electrode section 10 as a voltage. The shunt resistance 50 can be 5 kΩ, for example. In this case, discharge current of 10 µA generates a voltage of 50 mV.

The voltage generated across the shunt resistance 50 is measured by an oscilloscope 60 and a personal computer (PC) 70 connected to the oscilloscope 60. The shunt resistance 50 and oscilloscope 60 are connected to each other through a 5 m-long 50 Ω coaxial cable, for example. The shunt resistance 50 is equipped with an overvoltage protection circuit and a filter circuit. The overvoltage protection circuit includes a Zener circuit or the like. The overvoltage protection circuit prevents the oscilloscope 60 from undergoing overvoltage failure due to excess discharge including Trichel pulses. The filter circuit is configured so that the measurement frequency band does not change depending on the length of and bend in the coaxial cable.

The oscilloscope 60 measures the voltage generated across the shunt resistance 50 and converts the measured voltage into discharge current flowing through the test piece 100 and discharge current flowing without passing through the test piece 100. The PC 70 analyses the measurements obtained by the oscilloscope 60 and provides a voltage-current characteristic (VI characteristic) graph, for example.

Fig. 1(b) illustrates the installation for correcting only the performance of the electrode section 10 in the discharge testing device. Herein, the grounding plate 30 is situated at the distance D0 from the electrode section 10. The installation for correction is the same as that with the test piece 100 placed in the discharge testing device as illustrated in Fig. 1(a) except that the test piece 100 and insulator 31 are removed and the grounding plate 30 is brought close to the position corresponding to the upper end of the test piece 100, that is, the position at the distance DO from the electrode section 10. Hereinafter, the installation for correction illustrated in Fig. 1(b) is used to evaluate the performances of various types of electrodes.

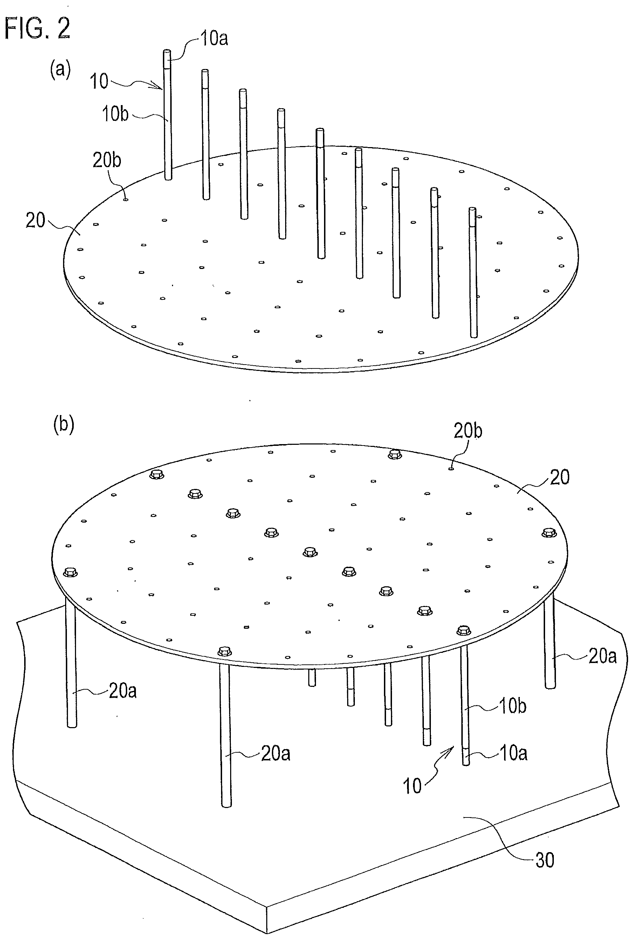

Fig. 2 includes diagrams illustrating the configurations of the electrode section 10 and electrode section supporting member 20. Fig. 2(a) is a perspective view illustrating an appearance of the electrode section 10 and electrode section supporting member 20 as seen from the side of the electrode section supporting member 20 with the electrode section 10 attached. Fig. 2(b) is a perspective view illustrating the appearance of the electrode section 10 and electrode section supporting member 20 which are situated on the grounding plate 30.

The electrode section 10 includes an electrode 10a rotationally axisymmetric in the direction of an axis and a shaft 10b having the same diameter as that of the electrode 10a. The shaft 10b is attached to the electrode 10a so as to extend on the same axis. The base of the electrode 10a, which is opposite to the tip thereof, is screwed to an end of the shaft 10b. The electrode 10a can be fixed by a conductive adhesive instead of screwing. The same goes for the following description.

The electrode section supporting member 20 is made of a circular metallic plate with a predetermined thickness and includes holes 20b at predetermined intervals so as to penetrate the metallic plate. The electrode section 10 is attached to the electrode section supporting member 20 with the other end of the shaft 10b screwed to one of the holes 20b so that the longitudinal direction of the electrode section 10 is perpendicular to one surface of the electrode section supporting member 20.

The shaft 10b is substantially longer than the electrode 10a in the longitudinal direction so that the electrode 10a is situated at a predetermined distance from the surface of the electrode section supporting member 20. The electrode 10a and shaft 10b of the electrode section 10 and the electrode section supporting member 20 can be made of proper metal such as brass or aluminum, for example.

Fig. 2 illustrates an example in which nine electrode sections 10 are attached at regular intervals in a radial direction of the electrode section supporting member 20. The installation is not limited to this example. In actual testing of the test piece 100 where the electrode sections 10 are provided so as to face the test piece 100, a number of electrode sections 10 can be arranged at positions in accordance with the size of the test piece 100 by attaching the electrode sections 10 to the respective holes 20b of the electrode section supporting member 20.

As illustrated in Fig. 2(b), the electrode sections 10 and electrode section supporting member 20 are arranged with the electrode sections 10 facing down so as to face the grounding plate 30. On the surface of the electrode section supporting member 20 with the electrode sections 10 attached, plural spacers 20a having a predetermined length are attached.

These spacers 20a ensure the predetermined distance between the electrode section supporting member 20 and grounding plate 30 so as to maintain the distance DO between the electrode section 10 and grounding plate 30. Each of the spacers 20a is made of an insulator so as to electrically isolate the electrode section supporting member 20 from the grounding plate 30.

### (First Embodiment)

As a first embodiment, a description is given of an electrode 10a having a blade-shaped and serrated tip (hereinafter, just referred to as a blade-shaped/serrated type). The dimensions thereof are just examples of electrodes used in testing, and the actual profile is not limited to the embodiment.

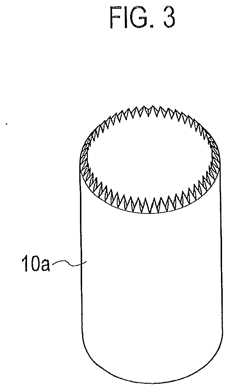

Fig. 3 is a perspective view illustrating the appearance of the electrode 10a. The electrode has a cylindrical or columnar profile rotationally axisymmetric in the direction of the axis and includes a blade section at the tip. The blade section has an outer surface inclined inward. At the tip of the electrode 10a, the blade section includes 54 identical serrations to form a serrated section.

Considering the necessity to equally and continuously arrange the serrations on the circumference and the workability thereof, the number of the serrations may be even but may be odd. At processing of the serration part including an even number of serrations by using a discharge wire, two serrations facing each other across the axis can be simultaneously formed, thus shortening the processing time.

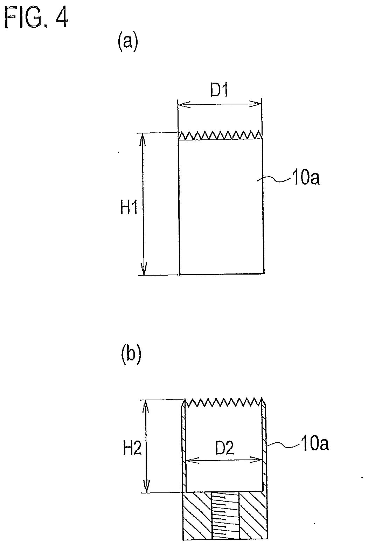

Fig. 4(a) is a side view of the electrode 10a. The electrode 10a has dimensions of: height HI = 15 mm and diameter D1 = 10 mm. Fig. 4(b) is a cross-sectional view of the electrode 10a. The electrode 10a has dimensions of: height H2 of the inner surface from the base to the tip = 10 mm and inner diameter D2 = 9 mm.

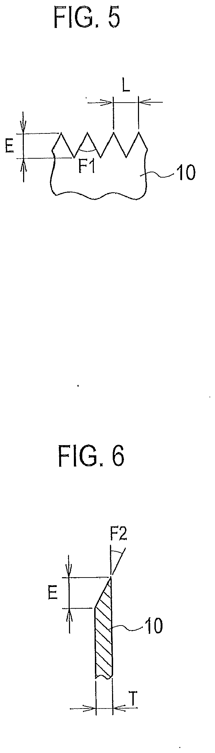

Fig. 5 is a partially-enlarged view of the side surface of a part of the electrode 10 including the tip. As illustrated in Fig. 5, the dimensions of the tip are: height E of each serration = 1 mm, the distance L between apexes of adjacent serrations or the base length = 0.52 mm, and apex angle F1 of each serration in the circumferential direction = 29°.

Fig. 6 is a partially-enlarged cross-sectional view of the part including the tip of the electrode 10a. As illustrated in Fig. 6, the outer surface of the tip has a surface inclined at a predetermined angle toward the inner surface. Herein, base thickness T of each serration = 0.5 mm and apex angle F2 of each serration in the thickness direction = 30°.

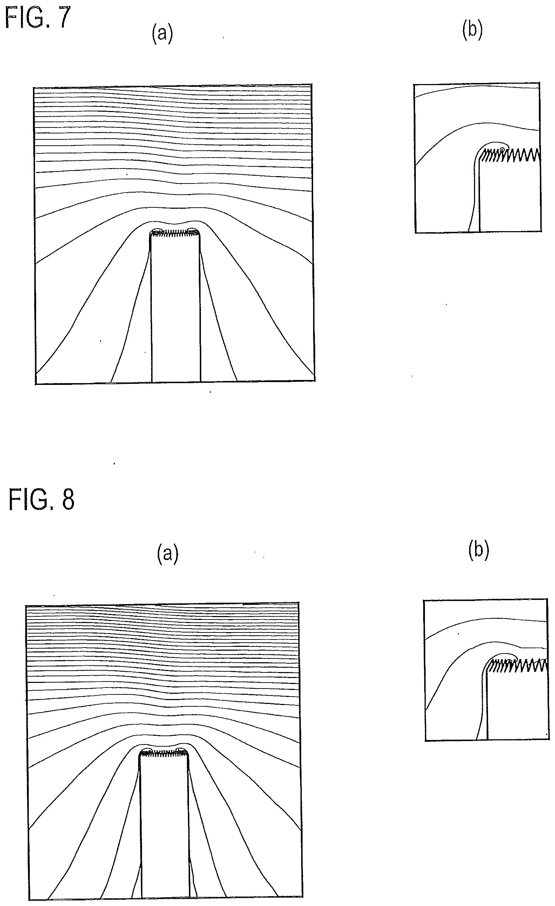

Fig. 7 includes diagrams illustrating the potential distribution around the electrode 10a. As described above, at the tip of the electrode 10a, the apex angles F1 and F2 of each serration in the circumferential direction and in the thickness direction are 29° and 30°, respectively.

Fig. 7(a) is a cross-sectional view illustrating the potential distribution around the electrode 10a and shaft 10b, and Fig. 7(b) is a partially-enlarged cross-sectional view illustrating the potential distribution around the tip of the electrode 10a. These potential distributions are calculated by simulation. The same goes for the following graphs.

As apparent from Figs. 7(a) and 7(b), equipotential surfaces are densely distributed in the axial direction from the tip of the electrode 10a, and the electric field is large in the axial direction. In contrast, equipotential surfaces are sparsely distributed in the circumferential direction from the tip of the electrode 10a, and the electric field is small in the circumferential direction.

Fig. 8 includes diagrams illustrating the potential distribution around the electrode 10a in a comparative example in which the apex angles F1 and F2 of each serration in the circumferential direction and in the thickness direction are set to 5°. Fig. 8(a) is a cross-sectional view illustrating the potential distribution around the electrode 10a and shaft 10b, and Fig. 8(b) is a partially-enlarged cross-sectional view illustrating the potential distribution around the tip of the electrode 10a.

Compared with the first embodiment illustrated in Fig. 7, in the comparative example of Fig. 8, in which the apex angles F1 and F2 of each serration are reduced, the equipotential surfaces are distributed more densely in the axial and circumferential directions of the electrode 10a, and the electric field is increased. Accordingly, discharge is more likely to occur in the environment of the comparative example than in the environment of the first embodiment. However, the comparative example of Fig. 8 have concerns about erosion due to heat of discharge current and reduction in processing accuracy.

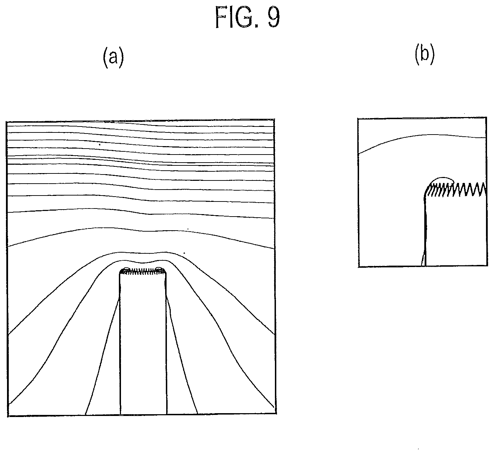

Fig. 9 includes diagrams illustrating the potential distribution around the electrode 10a in a comparative example in which the apex angles F1 and F2 of the serrations in the circumferential direction and in the thickness direction are set to 55°. Fig. 8(a) is a cross-sectional view illustrating the potential distribution around the electrode 10a and shaft 10b, and Fig. 8(b) is a partially-enlarged cross-sectional view illustrating the potential distribution around the tip of the electrode 10a.

In the comparative example of Fig. 9, in which the apex angles F1 and F2 of each serration are increased, compared with the first embodiment illustrated in Fig. 7, the equipotential surfaces are distributed more sparsely both in the axial and circumferential directions of the electrode 10a, and the electric field is reduced. Accordingly, discharge is less likely to occur in the environment of the comparative example than in the environment of the first embodiment.

In the first embodiment illustrated in Fig. 7, the apex angles F1 and F2 of each serration in the circumferential and thickness directions are 29° and 30°, respectively. The apex angles F1 and F2 of each serration are not limited thereto. Comparison with the comparative examples of Figs. 8 and 9 reveals that the apex angles F1 and F2 of each serration need to be 5° < F1 < 55° and 5° < F2 < 55°. The apex angles F1 and F2 of each serration are preferably 20° < F1 < 40° and 20° < F2 < 40° and more preferably 25° < F1 < 35° and 25° < F2 < 35°.

By setting the apex angles F1 and F2 of each serration in the aforementioned ranges, it is possible to produce an electric field of a predetermined magnitude and ensure the strength and heat radiation performance of the serrations. Accordingly, discharge can be easily generated without causing erosion due to heat or reducing the processing workability.

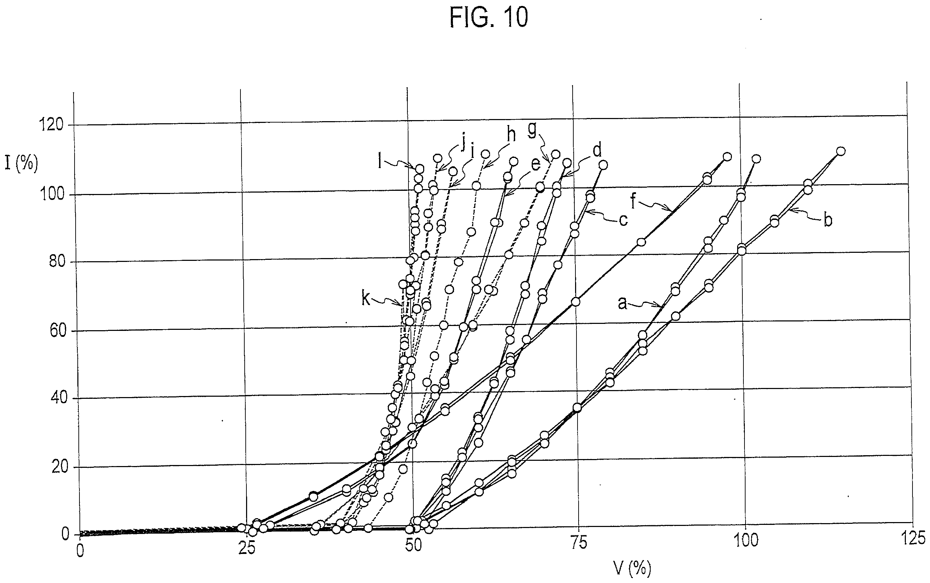

Fig. 10 is a diagram illustrating the relationship between voltage applied to the electrode section 10 and discharge current which are measured in the discharge measurement device. The scales thereof are dimensionless. In the measurement, a predetermined voltage supplied from the high-voltage DC power supply 41 of the power supply 40 is applied across the electrode section 10 and grounding plate 30 for a predetermined period of time through the switch 43, and the current flowing therebetween due to discharge is measured through the shunt resistance 50 using the oscilloscope 60 and PC 70.

A line a in Fig. 10 illustrates the case where two blade-shaped/serrated electrodes are extended by 15 mm from the original position toward the grounding plate 30. Lines g to 1 in Fig. 10 corresponds to comparative examples later described. The slope of the change in current with respect to the change in voltage is smaller than that of the comparative examples. In other words, the embodiment has such robust properties that current is stable under variations in the applied voltage.

In the first embodiment, it is thought that production of the above-described unequal electric field concentrating at the tip of each serration generates stable discharge as a whole. The discharge voltage is therefore reduced, and there is no Torricelli pulse. As the results of measurement, discharge occurs in a range from 10 to 28 kV and is glow corona discharge stably maintained without producing Trichel pulses. Moreover, as described above, the slope of the change in discharge current with respect to the change in applied voltage is small, and the robust properties are ensured.

### (Second Embodiment)

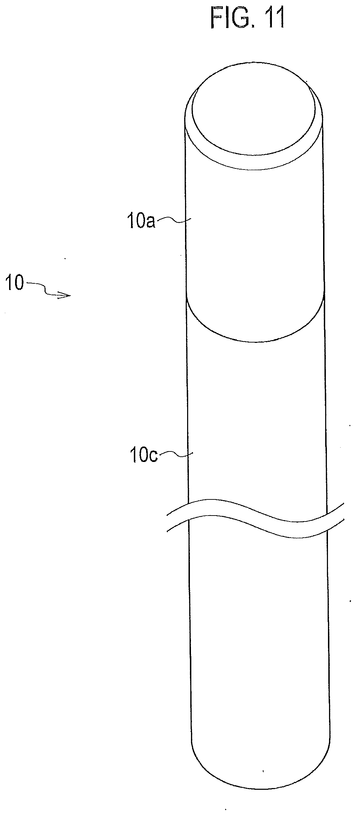

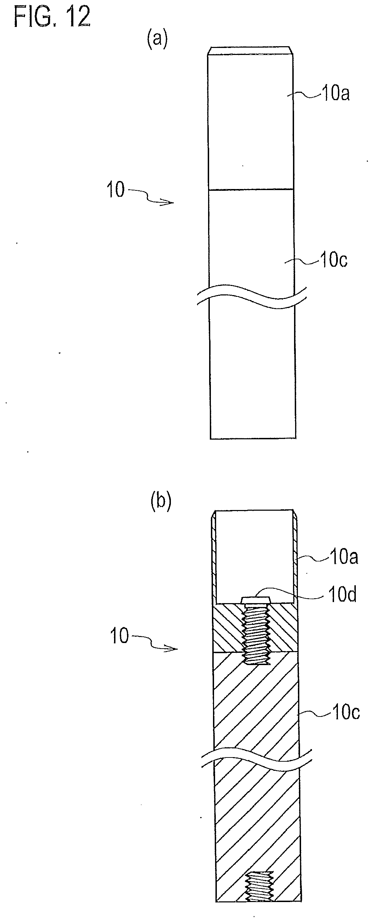

In a second embodiment, the electrode 10a has a blade-shaped tip and is combined and paired with a 100 MΩ resistor having the same diameter as that of the electrode 10a. Fig. 11 is a perspective view illustrating the appearance of the electrode section 10 of the second embodiment. Fig. 12(a) is a side view of the electrode section 10 of the second embodiment, and Fig. 12(b) is a cross-sectional view.

In the second embodiment, the electrode section 10 includes a pair of the blade-shaped electrode 10a and 100 MΩ resistor 10c which are combined and joined with a screw 10d. The blade-shaped electrode 10a is different from the blade-shaped/serrated electrode 10a of the first embodiment only in including no serrations. The dimensions of the blade-shaped electrode 10a are the same as those of the blade-shaped/serrated electrode 10a of the first embodiment. The resistor 10c has the same dimensions as the shaft 10b of the first embodiment and gives a resistance of 100 MΩ in the longitudinal direction.

The resistor 10c includes a coating which is formed by uniformly applying a resistor to the circumferential surface thereof. The resistor 10c can be a resistor having a cylindrical structure and including a resistive coating on the surface of the composite or glass cylinder, such as a metal glaze resistor or a ceramic resistor.

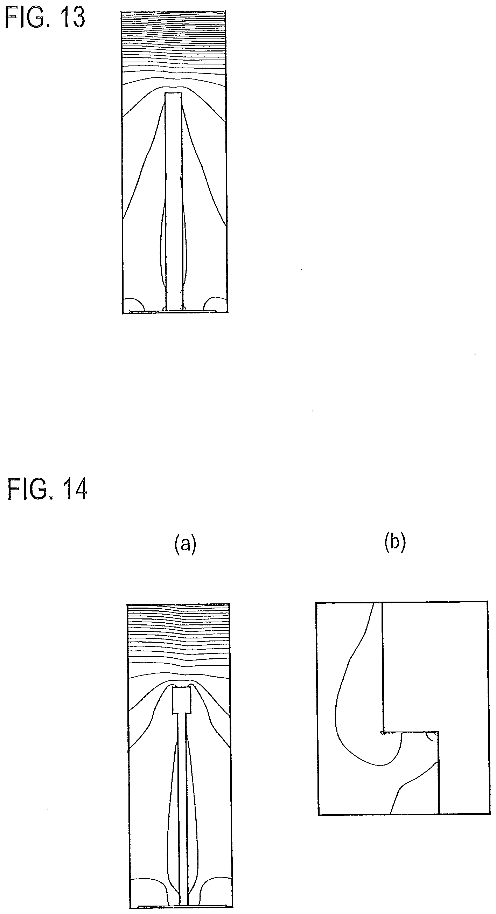

Fig. 13 is a cross-sectional view illustrating the potential distribution around the joint between the paired electrode 10a and resistor 10c. In Fig. 13, in order to reveal the potential distribution around the joint between the electrode 10a and resistor 10c, the resistance of the resistor 10c is set to 0 for convenience. The same goes for Fig. 14 illustrating a comparative example.

The resistor 10c includes the resistor coating uniformly formed on the outer circumferential surface and can be considered as metal having a resistivity. Accordingly, the equipotential surfaces are continuous smoothly near the surface across the joint between the electrode 10a and resistor 10c. The electric field is continuous smoothly from the electrode 10a in the longitudinal direction of the resistor 10c.

Fig. 14 includes diagrams illustrating the potential distribution in the comparative example in which the diameter of the resistor 10c is smaller than that of the electrode 10a. Fig. 14(a) is a cross-sectional view illustrating the potential distribution around the pair of the electrode 10a and resistor 10c, and Fig. 14(b) is a partially-enlarged cross-sectional view illustrating the potential distribution around the joint between the electrode 10a and resistor 10c.

In this case, the equipotential surfaces are discontinuous at the joint between the electrode 10a and resistor 10c. In this region, the electric field is significantly disturbed from the electrode 10a in the longitudinal direction of the resistor 10c.

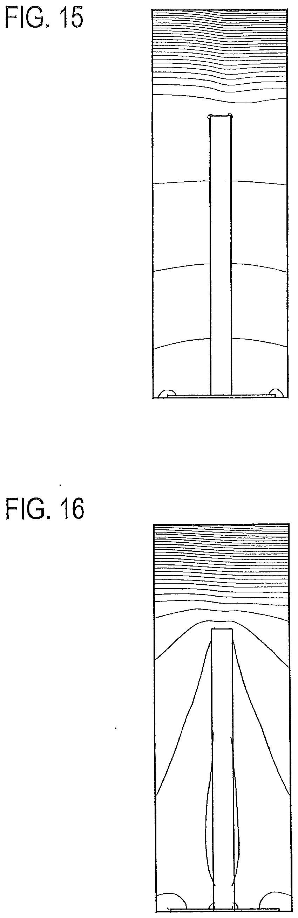

Fig. 15 is a cross-sectional view illustrating the potential distribution around the electrode 10a and resistor 10c. Since the resistance of the resistor 10c is as high as 100 MΩ, the potential at the tip of the electrode 10a is raised, and the electric field is enhanced. The electric field is thereby uniformly distributed along the electrode 10a and resistor 10c in the longitudinal direction thereof and is remarkably stable. In the case where plural electrodes are used together, the aforementioned effects eliminate the need to control the intervals between the electrodes so as to distribute the electric field uniformly.

Fig. 16 is a cross-sectional view illustrating the potential distribution in a comparative example with the resistance of the resistor 10c set to 0. In this comparative example, the potential at the tip of the electrode 10a is not raised, and the direction of the electric field along the electrode 10a and resistor 10c is inhomogeneous in the longitude direction thereof. Accordingly, in the case where plural electrodes are used together, the electric field could be disturbed due to the interference between adjacent electrodes.

In Fig. 10 illustrating the relationship between the voltage applied to the electrode section 10 and discharge current, the second embodiment corresponds to the lines b to e. The line b corresponds to the case where two pairs of the electrode 10a and resistor 10c are provided on the electrode section supporting member 20. Similarly, the lines c, d, and e correspond to five pairs, seven pairs, and nine pairs of the electrode 10a and resistor 10c, respectively.

Comparing the lines b to e of the second embodiment with the lines g to 1 of the later-described comparative examples, the slope of the change in current with respect to the change in voltage applied to the electrode section 10 is smaller in the second embodiment than in the comparative examples. This shows the robust properties that current is stable under variations in the applied voltage.

In the second embodiment, it is thought that addition of the 100 MΩ resistor 10c increases the intensity of the electric field at the tip of the blade-shaped electrode 10a and therefore reduces the discharge voltage. As the result of measurement, discharge occurs in a range from 10 to 28 kV, and the discharge is glow corona discharge stably maintained without producing Trichel pulses.

### (Third Embodiment)

In a third embodiment, the electrode 10a has a blade-shaped/serrated tip and is combined and paired with a 100 MΩ resistor 10c having the same diameter as that of the electrode 10a. The third embodiment is the same as the second embodiment except that the blade-shaped electrode 10a in the second embodiment illustrated in Figs. 11 and 12 is replaced with the blade-shaped/serrated electrode 10a illustrated in Figs. 3 to 6.

In Fig. 10 illustrating the relationship between the voltage applied to the electrode section 10 and discharge current, the line f illustrates the case where two pairs of the blade-shaped/serrated electrode 10a and 100 MΩ resistor 10c are provided on the electrode section supporting member 20.

As for the line f of the third embodiment, the slope of the change in current with respect to the change in voltage is smaller than the slope of not only lines g to 1 of the comparative examples described later but also the slope of the line a of the first embodiment and the lines b to e of the second embodiment. This shows that the third embodiment provides better robust properties that current is more stable under variations in the applied voltage.

In the third embodiment, it is thought that the serrated tip generates a non-uniform electric field while the addition of the 100 MΩ resistor 10c increases the intensity of the electric field at the tip of the electrode 10a. The discharge voltage is therefore further reduced. The discharge is glow corona discharge stably maintained without producing Trichel pulses. Moreover, in the third embodiment, the robust properties are excellent as described above.

### (Fourth Embodiment)

The fourth embodiment is a comb-shaped electrode in which the electrode section 10 includes metallic pins arranged on the surface of the electrode section supporting member 20 in a comb fashion.

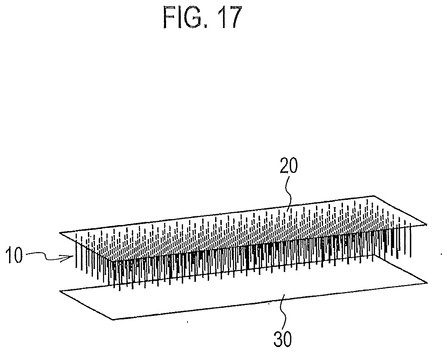

Fig. 17 is a perspective view illustrating the appearance of the electrode section 10, electrode supporting member 20, and grounding plate 30 situated facing the electrode section 10 in the fourth embodiment. In the fourth embodiment, the electrode section supporting member 20 is rectangular, unlike the circular shape illustrated in Fig. 1.

The electrode section 10 includes plural metallic pointed pins on the surface of the electrode section supporting member 20. The plural pins are arranged at predetermined intervals in a tetragonal arrangement so that the longitudinal direction of each pin extends perpendicularly to the surface of the electrode section supporting member 20. The electrode section 10 can be formed by sticking the pins into the electrode section supporting member 20, which is made of a thin metallic plate, from the back side, for
example.

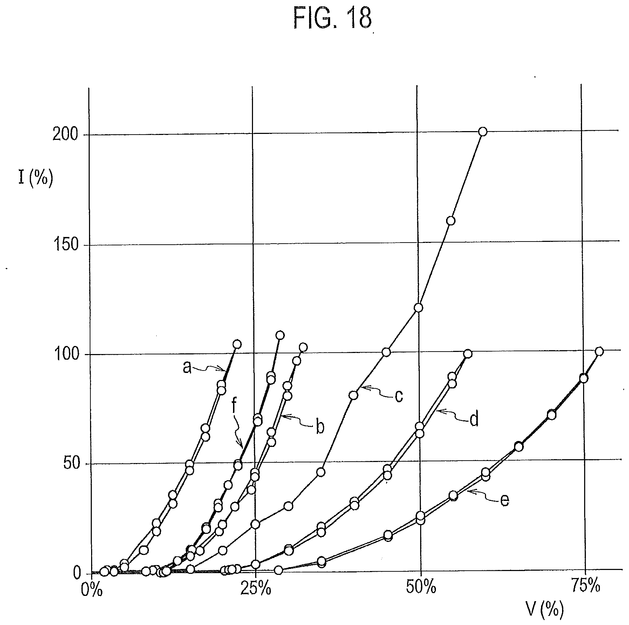

Fig. 18 is a diagram illustrating the result of measuring the relationship between the voltage applied to the electrode section 10 and discharge current in the fourth embodiment using the discharge measurement device. A line a in Fig. 18 illustrates the result when the intervals of the pins are 10 mm and a distance D0 between the electrode section 10 and grounding plate 30 is 25.4 mm. Lines b, c, and d in Fig. 18 illustrate the results when the distance DO between the electrode section 10 and grounding plate 30 is changed to 34, 52, and 64 mm with the intervals of the pins maintained at 10 mm.

A line e illustrates the result when the area of the electrode section 10 or electrode section supporting member 20 facing the grounding plate 30 is reduced to one third while the distance D0 between the electrode section 10 and grounding plate 30 is maintained at 25.4 mm and the intervals of the pins are maintained at 10 mm. A line f illustrates the result when the distance DO is maintained at 25.4 mm and the intervals of the pins are increased to 20 mm.

As apparent from the results, as the distance DO between the electrode section 10 and grounding plate 30 is increased to 25.4, 34, 52, and 64 mm with the intervals of the pins fixed to 110 mm, as illustrated by the lines a to d, the discharge current lowers, and the discharge inception voltage increases. As illustrated by the line e, the discharge current is reduced when the areas of the electrode section 10 and electrode section supporting member 20 are reduced to one third.

On the other hand, as illustrated by the line f, the discharge current increases when the intervals of the pins are increased from 10 mm to 20 mm. This is considered to be because uniform electric fields at the tips of the pins are more likely to be cancelled each other when the intervals of the pins are smaller as 10 mm.

According to the fourth embodiment, stable glow corona discharge is obtained without including Trichel pulses. The discharge occurs in a range from 7 to 11 kV when the pitch is 10 mm and occurs in a range from 5 to 10 kV when the pitch is 20 mm. The robust properties are ensured. Moreover, the discharge occurs uniformly across the electrodes.

### (Comparative Example 1)

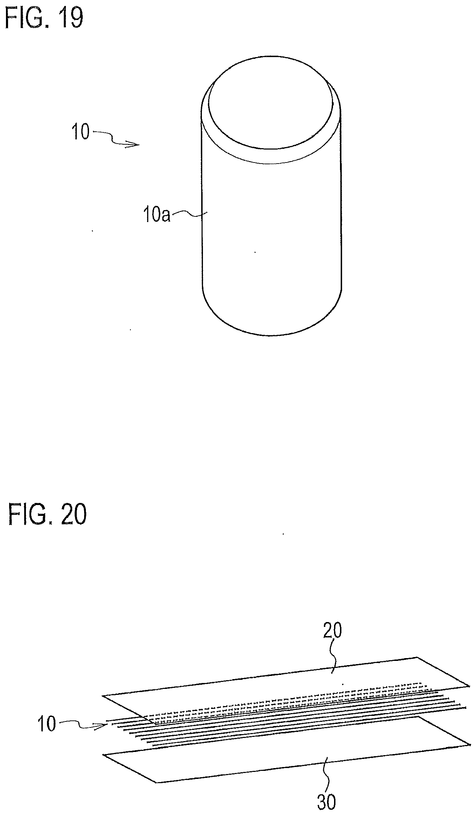

In Comparative example 1, the electrode 10a has a blade-shaped tip. Fig. 19 is a perspective view illustrating the appearance of the electrode 10a of Comparative example 1. The electrode 10a of Comparative example 1 has the same dimensions as those of the electrodes 10a of the first embodiment illustrated in Figs. 4 and 6 except that the tip includes the blade shape but is not serrated.

In Fig. 10 illustrating the relationship between the voltage applied to the electrode section 10 and discharge current, Comparative example 1 corresponds to the lines g to 1. The line g illustrates the case where the pair of the electrode 10a and shaft 10b is provided on the electrode section supporting member 20. Similarly, the lines j, k, and 1 correspond to two pairs, three pairs, five pairs, seven pairs, and nine pairs of the electrode 10a and resistor 10c, respectively.

As apparent from the lines g to 1, as the number of electrodes 10a is increased from one to nine, the discharge current increases and becomes more stable under variations in voltage. However, in every case of Comparative example 1, discharge includes Trichel pulses and is unstable.

### (Comparative example 2)

Comparative example 2 includes linear electrodes of metallic wires with a predetermined diameter. The metallic wires are linearly extended on the front side of the electrode section supporting member 20 and are arranged at a predetermined distance from the surface of the electrode section supporting member 20 with predetermined intervals.

Fig. 20 is a perspective view illustrating the appearance of the electrode section 10, electrode supporting member 20, and grounding plate 30 situated facing the electrode section 10 in Comparative example 2. In Comparative example 2, the electrode section supporting member 20 is rectangular similarly to the fourth embodiment, unlike the circular shape illustrated in Fig. 1.

In Comparative example 2, the metallic wires as the electrodes can be 0.2 diameter wires for use in discharge processing, for example. In Comparative example 2, Trichel pulses sometimes occur, and spark discharge sometimes appears. To generate a non-uniform electric field, the diameter of each metallic wire is preferably smaller. It can be thought that discharge is stabilized with thinner wires.

The embodiments show the electrodes 10a having a tip rotationally axisymmetric by way of example. However, the present embodiments are not limited thereto. The tip of the electrode does not need to be rotationally symmetric and needs to be continuous in a plane. For example, the tip may be a continuous blade forming a closed curve in a plane perpendicular to the longitudinal direction of the discharge electrode. For example, the electrode may have a tip formed by diagonally cutting the top or may have a polygonal cross section.

In the embodiments, the dimensions of the electrodes and various specifications of the testing device are described by way of example, but the present embodiments are not limited thereto. It can be understood by those skilled in the art that the present embodiments can be also implemented by properly changing the numerical values of the dimensions and specifications.

### DESCRIPTION OF REFERENCE NUMERALS

- 10: ELECTRODE SECTION
- 10a: ELECTRODE
- 10b: SHAFT
- 10c: RESISTOR
- 10d: SCREW
- 20: ELECTRODE SECTION SUPPORTING MEMBER
- 30: GROUNDING PLATE
- 31: INSULATOR
- 40: POWER SUPPLY
- 100: TEST PIECE

## Claims

1. A discharge electrode (10) generating glow corona discharge, comprising:
a tip section (10a) including a continuous blade forming a closed curve in a plane perpendicular to the longitudinal direction of the discharge electrode (10), the blade including a serrated edge formed in the direction that the blade extends,
**characterized in that**
the tip section (10a) has a cylindrical shape, and
the blade is formed by a part of the inner surface of the cylindrical shape and a part of the outer surface thereof inclined inward.

2. The discharge electrode (10) according to claim 1, wherein the serrated edge includes a plurality of serrations having an identical shape.

3. The discharge electrode (10) according to claim 2, further comprising:
a base section (20) supplying voltage to the discharge electrode (10), wherein
the tip section (10a) is connected to the base section (20) through a resistor (10c) having a predetermined resistance value.

4. A testing device evaluating a component (100), comprising:
a discharge electrode (10) according to any one of claims 1 to 3, wherein glow corona discharge is supplied to the component (30) through the discharge electrode (10).

## Patentansprüche

1. Entladungselektrode (10), die Glimm-Koronaentladung erzeugt, umfassend:
einen Spitzenabschnitt (10a), der eine kontinuierliche Klinge umfasst, die eine geschlossene Kurve in einer Ebene senkrecht zur Längsrichtung der Entladungselektrode (10) bildet, wobei die Klinge einen Wellenschliff umfasst, der in der Richtung, in der sich die Klinge erstreckt, gebildet ist,
**dadurch gekennzeichnet, dass**
der Spitzenabschnitt (10a) eine zylindrische Form aufweist und
die Klinge durch einen Teil der Innenfläche der zylindrischen Form gebildet und ein Teil der Außenfläche davon nach innen geneigt ist.

2. Entladungselektrode (10) nach Anspruch 1, wobei der Wellenschliff mehrere Kerbverzahnungen mit einer identischen Form umfasst.

3. Entladungselektrode (10) nach Anspruch 2, ferner umfassend:
einen Basisabschnitt (20), der Spannung an die Entladungselektrode (10) bereitstellt, wobei
der Spitzenabschnitt (10a) mit dem Basisabschnitt (20) durch einen Widerstand (10c) mit einem vorbestimmten Widerstandswert verbunden ist.

4. Prüfeinrichtung, die eine Komponente (100) auswertet, umfassend:
eine Entladungselektrode (10) nach einem der Ansprüche 1 bis 3, wobei durch die Entladungselektrode (10) eine Glimm-Koronaentladung an die Komponente (30) bereitgestellt wird.

## Revendications

1. Électrode de décharge (10) générant une décharge à effet corona, comprenant :
une section de pointe (10a) incluant une lame continue formant une courbe fermée dans un plan perpendiculaire à la direction longitudinale de l'électrode de décharge (10), la lame incluant un bord dentelé formé dans la direction dans laquelle la lame s'étend,
**caractérisé en ce que**
la section de pointe (10a) a une forme cylindrique, et
la lame est formée par une partie de la surface intérieure de la forme cylindrique et une partie de la surface extérieure de celle-ci inclinée vers l'intérieur.

2. Électrode de décharge (10) selon la revendication 1, dans lequel le bord dentelé inclut une pluralité de dentelures ayant une forme identique.

3. Électrode de décharge (10) selon la revendication 2, comprenant en outre :
une section de base (20) fournissant de la tension à l'électrode de décharge (10), dans lequel
la section de pointe (10a) est connectée à la station de base (20) par une résistance (10c) ayant une valeur de résistance prédéterminée.

4. Dispositif d'essai évaluant un composant (100), comprenant :
une électrode de décharge (10) selon l'une quelconque des revendications 1 à 3, dans lequel la décharge à effet corona est fournie au composant (30) par le biais de l'électrode de décharge (10).
